# EUROPÄISCHE PATENTSCHRIFT

(11) **EP 2 042 366 B1**
(45) Veröffentlichungstag und Bekanntmachung des Hinweises auf die Patenterteilung: **29.08.2012**
(21) Anmeldenummer: 08016319.9
(22) Anmeldetag: 16.09.2008
(51) Int. Cl.: B60K 35/00, B60K 37/06, G06F 3/048

(54) **System und Verfahren zur Anzeige und Anwahl von Informationen in einem Kraftfahrzeug**
System and method of displaying and selecting of information in an automobile
Système et procédé pour afficher et sélecter des informations dans un véhicule automobile

(30) Priorität: 28.09.2007 DE 102007046714
(43) Veröffentlichungstag der Anmeldung: 01.04.2009
(73) Patentinhaber: Volkswagen Aktiengesellschaft, 38440 Wolfsburg (DE)
(72) Erfinder: Kuhn, Mathias, 14129 Berlin (DE); Hofmann, Gustav, 38114 Braunschweig (DE)

(56) Entgegenhaltungen:
- EP-A1- 1 071 060
- EP-A2- 1 571 536
- EP-A2- 1 646 026
- WO-A1-01/45080
- DE-A1- 10 308 899
- US-A1- 2006 026 521

## Beschreibung

Die Erfindung betrifft ein System und ein Verfahren zur Anzeige und Anwahl von Informationen in einem Fahrzeug nach dem Oberbegriff der Ansprüche 1 und 4.

Insbesondere in Kraftfahrzeugen werden Informationen in einer Anzeigeeinrichtung in Form einer Liste dargestellt, wie beispielsweise in der DE 199 41 967 A1 offenbart. Dabei handelt es sich um Telefonlisten, Navigationsdaten wie Straßennamen, Adressenlisten, Musiktitel, usw. Mit Hilfe von Bedieneinrichtungen werden diese Listen ausgewählt und die Informationen aus den Listen in Anzeigefeldern dargestellt. Vielfach wird aus Gründen der Lesbarkeit bevorzugt, dass die Darstellung ein einheitliches Format besitzt, so dass aufgrund der begrenzten Anzeigefläche möglicherweise nur Ausschnitte der kompletten Information angezeigt werden können. Auf diese Weise kann es vorkommen, dass die dargestellten Ausschnitte identisch sind, obwohl die kompletten zugehörigen Informationen sich voneinander unterscheiden.

Hauptaufgabe eines Fahrzeugführers ist die sichere Fahrt eines Kraftfahrzeuges. Dies erfordert die vollständige Konzentration der Aufmerksamkeit auf den Verkehr und auf die zur Fahrzeugführung notwendigen Mittel, wie beispielsweise der Lenkung, des Gaspedals, der Bremse, usw. Wichtige Informationen bekommt der Fahrzeugführer ebenfalls über Anzeigevorrichtungen der Instrumententafel, wie beispielsweise die momentane Geschwindigkeit des Fahrzeugs. Es besteht auch die Möglichkeit, dass der Fahrer während der Fahrt ein Telefonat führen will, oder aber einen Musiktitel auswählen möchte, um ihn zu hören. Durch eine Menüführung, die beispielsweise in einer kleinen Anzeigevorrichtung im Kombiinstrument dargestellt wird, besteht die Möglichkeit, dass sich der Fahrer Telefonlisten oder Listen von Musiktiteln anzeigen lässt, um eine Auswahl zu treffen. Da die Fahraufgabe die volle Konzentration und Aufmerksamkeit des Fahrers beansprucht, besteht für die Auswahl aus einer Liste von Möglichkeiten nur wenig Zeit um Information aufzunehmen und eine Entscheidung zu treffen. Erschwert wird die Information in listenförmigen Anzeigefeldern, wenn Telefonlisten z.B. nach Namen sortiert sind, die sich nur durch die Vornamen unterscheiden, die üblicherweise ans Ende des Nachnamens gestellt werden. Bei Musiktiteln verhält es sich ähnlich, wenn diese mit dem gleichen Anfangswort beginnen.

Ein gattungsgemäßes System zur Anzeige und Anwahl von angezeigten alphanumerischen und/oder symbolartigen Informationen in einem Kraftfahrzeug ist aus der Bedienungsanleitung des Mobiltelefons SAGEM MY-X5 bekannt. Dabei werden die Informationen in den Anzeigefeldern in dem gleichen Schriftformat dargestellt, wobei es aufgrund der Länge der Information dazu kommen kann, dass eine einzelne information in einem Anzeigefeld nicht vollständig dargestellt werden kann. Wird nun ein solches Anzeigefeld ausgewählt, so wird die Information durch wechselseitiges horizontales scrollen in Art einer Laufschrift angezeigt. Dies ist jedoch bei Anwendungen in einem Kraftfahrzeug nachteilig, da der Nutzer relativ lange auf die Anzeigeeinrichtung blicken muss, um die vollständige Information zu erfassen.

Die Aufgabe der Erfindung besteht darin, ein System und ein Verfahren so auszugestalten, dass in einer listenförmigen Darstellung trotz angezeigter gleicher Ausschnitte im Bedarfsfall die komplette Information aus dem Anzeigefeld schnell auslesbar ist.

Die Lösung der Aufgabe wird durch die unabhängigen Patentansprüche 1 und 4 erreicht. Weitere vorteilhafte Ausführungen der Erfindung finden sich in den Unteransprüchen.

Das System zur Anzeige und Anwahl von angezeigten alphanumerischen und/oder symbolartigen Informationen in einem Kraftfahrzeug umfasst hierzu eine Anzeigeeinrichtung zur Darstellung von mehreren Anzeigefeldern zur Anzeige der alphanumerischen und/oder symbolartigen Informationen, mindestens eine Bedieneinrichtung und eine Verarbeitungseinrichtung, wobei alle listenmäßig dargestellten Informationen in den Anzeigefeldern auf der Anzeigeeinrichtung in dem gleichen Schriftformat dargestellt werden, wobei in mindestens einem Anzeigefeld die Information aufgrund der begrenzten Größe der Anzeigefelder nicht vollständig dargestellt ist, und wobei, nach Anwahl eines Anzeigefeldes mit nicht vollständiger Information über die Bedieneinrichtung, die Darstellung der alphanumerischen und/oder symbolartigen Information in diesem Anzeigefeld an den Umfang der über das Anzeigefeld anzuzeigenden Information derart angepasst wird, dass die komplette Information im Anzeigefeld auf der Anzeigeeinrichtung dargestellt wird, wobei die Anpassung dadurch erfolgt, dass die Verarbeitungseinrichtung das Schriftformat verkleinert, wobei die Anpassung der Anzeige erst dann vorgenommen wird, wenn die zur Markierung des entsprechenden Anzeigefeldes betätigte Bedieneinrichtung für einen längeren Zeitraum betätigt bleibt. Ansonsten wird trotz der Anwahl keine Änderung der Darstellung vorgenommen. Dies ist beispielsweise dann vorteilhaft, wenn der Bedienungsperson aufgrund der Lage des Anzeigefeldes bekannt ist, welcher komplette Informationsinhalt diesem Anzeigefeld zugeordnet ist. Es ist deshalb ein besonders erfinderisches Merkmal, dass beim Durchlaufen der Liste nicht alle Informationen, die angewählt werden sofort angepasst werden, sondern erst nach einer voreingestellten Verweildauer die Anpassung geschieht. In der Regel wird das angewählte listenförmige Anzeigefeld durch eine Umrandung hervorgehoben. Jegliche anderen Darstellungsformen sind auch denkbar, auch die, dass das angewählte Anzeigefeld nicht hervorgehoben ist, weil es z.B. als Einziges auf einer Anzeigevorrichtung erscheint. Ist ein Anzeigefeld angewählt und der Fahrzeugführer wählt innerhalb einer Verweilzeitdauer von z.B. 0,3 Sekunden kein weiteres Anzeigefeld an, so erfolgt die erfindungsgemäße Anpassung der Information. Besonders vorteilhaft ist dieses Merkmal, da dem Fahrzeugführer durch die Anwahl der listenförmigen Anzeigefelder viel Information gegeben wird, auf die er sich konzentrieren muss und eine Anpassung ohne Verweilzeit eine zusätzliche Anstrengung bedeuten würde. Andere wahlweise Anpassungen der Information sind natürlich auch denkbar.

Vielfach wird von der Bedienungsperson die eine oder andere Darstellungsform der Zeichen bevorzugt verwendet. In diesem Falle empfiehlt sich die Verwendung der Merkmale nach Anspruch 2. Auch kann die Art der jeweiligen Darstellungsform selbsttätig vorgegeben werden, was beispielsweise in Abhängigkeit von der Lesbarkeit der Information geschehen kann.

In einem weiteren vorteilhaften Merkmal der Erfindung wird das angewählte listenförmige Anzeigefeld durch mindestens eine Bedieneinrichtung aktiviert.

Die Erfindung ist nicht auf den Einsatz in einem Fahrzeug beschränkt. Weitere denkbare Einsatzgebiete sind die Telefontechnik, Handy, Computer, usw.

Bevorzugte Ausführungsformen der Erfindung werden nachfolgend anhand der Zeichnungen erläutert.
Fig. 1: einen Ausschnitt aus einer Anzeigeeinrichtung mit mehreren untereinander angeordneten Anzeigefeldern (listenförmige Anzeigefelder)
Fig. 2: einen Ausschnitt aus einer Anzeigeeinrichtung mit einem Anzeigefeld in dem der Inhalt der kompletten Information gleichzeitig angezeigt wird und
Fig. 3: einen Ausschnitt aus einer Anzeigeeinrichtung mit einem nicht erfindungsgemäßen Anzeigefeld in dem der Ausschnitt des Inhaltes der kompletten Information dargestellt ist (Laufschrift)
Fig. 4: eine Vorrichtung bestehend aus einer Anzeigevorrichtung einer Verarbeitungseinrichtung und mindestens einer Bedieneinrichtung

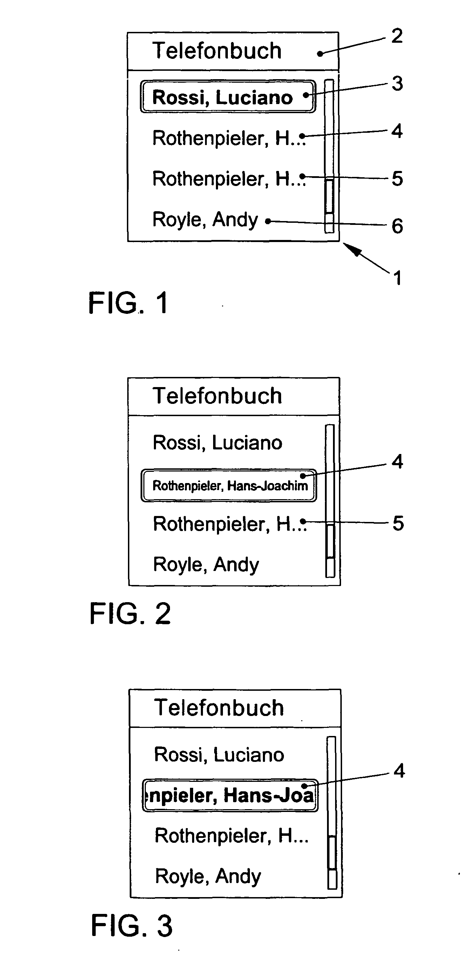

In Fig. 1 ist eine Anzeigeeinrichtung 1 dargestellt welche ein Menüfeld 2 und vier listenförmige Anzeigefelder 3 bis 6 zeigt, von denen ein Anzeigefeld 4 durch eine geeignete Tastenbetätigung markiert, d.h. angewählt ist.

In Fig. 1 sind alle listenmäßig dargestellten Informationen in dem gleichen Schriftformat, d.h. der gleichen Schriftgröße dargestellt. Allerdings ist der Inhalt der Information der Anzeigefelder 4 und 5 aufgrund der begrenzten Größe der Anzeigefelder abgeschnitten, so dass innerhalb des Anzeigefeldes nur identische Informationen lesbar sind. Mittels der Erfindung ist es nun möglich, durch Markierung der Anzeigefelder 4 oder/und 5 den kompletten Inhalt in diesem listenförmigen Anzeigefeld oder diesen Anzeigefeldern anzuzeigen (s. z.B. Fig. 2). Dies ist durch eine Anpassung möglich, nämlich durch eine Verkleinerung des Schriftformates.

In Fig. 3 ist eine andere Darstellungsform zur Darstellung der kompletten Information gezeigt. Bei dieser Darstellungsform wird ohne Änderung des Schriftformates der angezeigten Information diese in Form eines Laufbandes oder Laufschrift durch das listenförmige Anzeigefeld bewegt. Anders ausgedrückt wird das Anzeigefeld wie ein Sichtfenster über die komplette Information geführt.

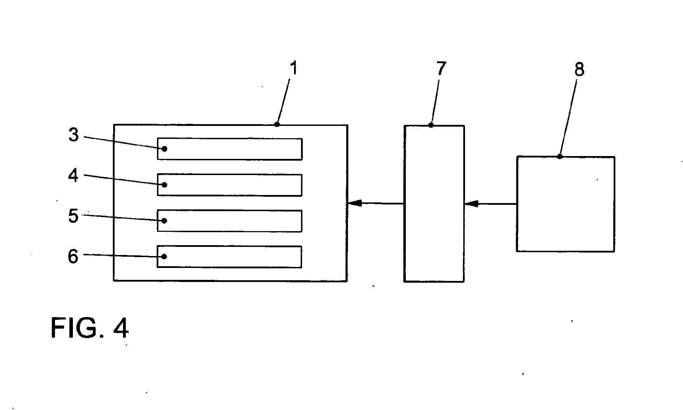

In Fig. 4 handelt es sich um ein Ausführungsbeispiel, in der einer Anzeigeeinrichtung (1) mit listenförmigen Anzeigefeldern dargestellt ist (3-6). Die Verarbeitungseinheit (7) kann beispielsweise ein Rechner sein, der mit einem Programm eine Darstellung der Anzeigefelder (ein Anzeigefeld, zwei Anzeigefelder; Anzeigefelder vertikal, Anzeigefelder horizontal, usw.) und ihren Inhalt (Telefonnummern, Musiktitel, usw.) ermöglicht. Über mindestens eine Bedieneinrichtung (8) wird das entsprechende Programm der Verarbeitungseinrichtung (7) zur Auswahl und Darstellung von listenförmigen Anzeigefeldern (3-6) über die Anzeigeeinrichtung (1) ausgewählt. Mit der mindestens einen Bedieneinrichtung wird das entsprechende Anzeigefeld angewählt und die erfinderische Darstellung des Inhaltes der Information des Anzeigefeldes erfolgt. Durch eine weitere Funktion der mindestens einen Bedieneinrichtung (8) wird die angewählte Information aktiviert, z.B. wählen der gewünschten Telefonnummer. Die Bedieneinrichtung (8) und die Anzeigeeinrichtung (1) können auch vorteilhafterweise als Touchscreen ausgeführt sein, die mit dem Rechner (7) verbunden sind und mit dem auf diese Weise erfinderisch gearbeitet werden kann.

### Bezugszeichenliste

- 1: Anzeigeeinrichtung
- 2: Menüfeld
- 3: Angewähltes Anzeigefeld
- 4-6: Anzeigefeld (angewählt oder nicht angewählt)
- 7: Verarbeitungseinrichtung
- 8: Bedieneinrichtung

## Patentansprüche

1. System zur Anzeige und Anwahl von angezeigten alphanumerischen und/oder symbolartigen Informationen in einem Kraftfahrzeug, mit einer Anzeigeeinrichtung (1) zur Darstellung von mehreren Anzeigefeldern (3-6) zur Anzeige der alphanumerischen und/oder symbolartigen Informationen, mit mindestens einer Bedieneinrichtung (8) und einer Verarbeitungseinrichtung (7), wobei alle listenmäßig dargestellten Informationen in den Anzeigefeldern (3-6) auf der Anzeigeeinrichtung (1) in dem gleichen Schriftformat dargestellt werden, wobei in mindestens einem Anzeigefeld (4, 5) die Information aufgrund der begrenzten Größe der Anzeigefelder (3-6) nicht vollständig dargestellt ist, und wobei, nach Anwahl eines Anzeigefeldes (4, 5) mit nicht vollständiger Information über die Bedieneinrichtung (8), die Darstellung der alphanumerischen und/oder symbolartigen Information in diesem Anzeigefeld (4, 5) an den Umfang der über das Anzeigefeld (4, 5) anzuzeigenden Information derart angepasst wird, dass die komplette Information im Anzeigefeld (4, 5) auf der Anzeigeeinrichtung (1) dargestellt wird, **dadurch gekennzeichnet, dass** die Anpassung dadurch erfolgt, dass die Verarbeitungseinrichtung (7) das Schriftformat verkleinert, wobei die Anpassung der Anzeige erst dann vorgenommen wird, wenn die zur Markierung des entsprechenden Anzeigefeldes (4, 5) betätigte Bedieneinrichtung (8) für einen längeren Zeitraum betätigt bleibt.

2. System nach Anspruch 1, **dadurch gekennzeichnet, dass** die Verarbeitungseinrichtung (7) derart ausgebildet ist, dass eine Darstellung der alphanumerischen und/oder symbolartigen Informationen wahlweise vorgebbar ist oder in Abhängigkeit von der Lesbarkeit der Gesamtinformation selbsttätig eingestellt wird.

3. System nach einem der vorigen Ansprüche, **dadurch gekennzeichnet, dass** eine Bedieneinrichtung (8) zur Aktivierung des angewählten Anzeigefeldes (4) vorgesehen ist.

4. Verfahren zur Anzeige und Anwahl von angezeigten alphanumerischen und/oder symbolartigen Informationen in einem Kraftfahrzeug, bei dem auf einer Anzeigeeinrichtung (1) mehrere Anzeigefelder (3-6) zur Anzeige der alphanumerischen und/oder symbolartigen Informationen dargestellt werden, wobei alle listenmäßig dargestellten Informationen in den Anzeigefeldern (3-6) in einem ersten Modus in einem gleichen Schriftformat auf der Anzeigeeinrichtung (1) dargestellt werden, wobei in mindestens einem Anzeigefeld (4, 5) die alphanumerischen und/oder symbolartigen Informationen in dem ersten Modus nicht vollständig dargestellt werden und wobei, nach Anwahl des Anzeigefeldes (3-6) über eine Bedieneinrichtung (8), in einem zweiten Modus die Darstellung der alphanumerischen und/oder symbolartigen information in diesem Anzeigefeld (4, 5) an den Umfang der über das Anzeigefeld (4, 5) anzuzeigenden Information auf der Anzeigeeinrichtung (1) derart angepasst wird, dass die komplette Information im Anzeigefeld (4, 5) dargestellt wird, **dadurch gekennzeichnet, dass** das Schriftformat automatisch verkleinert wird, wobei die Anpassung der Anzeige erst dann vorgenommen wird, wenn die zur Markierung des entsprechenden Anzeigefeldes (4, 5) betätigte Bedieneinrichtung (8) für einen längeren Zeitraum betätigt bleibt.

5. Verfahren nach Anspruch 4, **dadurch gekennzeichnet, dass** eine Darstellung der alphanumerischen und/oder symbolartigen Informationen wahlweise vorgegeben wird oder in Abhängigkeit von der Lesbarkeit der Gesamtinformation selbsttätig eingestellt wird.

6. Verfahren nach einem der Ansprüche 4 oder 5, **dadurch gekennzeichnet, dass** das angewählte Anzeigefeld (4) durch mindestens eine Bedieneinrichtung (8) aktiviert wird.

## Claims

1. System for displaying and selecting displayed alphanumeric and/or symbol-type information in a motor vehicle, having a display device, (1) for presenting a plurality of display panels (3-6) for displaying the alphanumeric and/or symbol-type information, having at least one operator control device (8) and a processing device (7), wherein all the information - presented on a list basis - in the display panels (3-6) on the display device (1) is presented in the same typeface format, wherein at least one display panel (4, 5) does not present the information completely on account of the limited size of the display panels (3-6), and wherein, following the selection of a display panel (4, 5) with incomplete information using the operator control device (8), the presentation of the alphanumeric and/or symbol-type information in this display panel (4, 5) is matched to the scope of the information that is to be displayed by means of the display panel (4, 5) such that the full information is presented in the display panel (4, 5) on the display device (1), **characterized in that** the matching is effected such that the processing device (7) reduces the typeface format, with the display being matched only when the operator control device (8) operated for the purpose of marking the relevant display panel (4, 5) remains operated for a relatively long period of time.

2. System according to Claim 1, **characterized in that** the processing device (7) is in a form such that a presentation of the alphanumeric and/or symbol-type information can be prescribed selectively or is automatically set on the basis of the legibility of the overall information.

3. System according to one of the preceding claims, **characterized in that** an operator control device (8) is provided for the purpose of activating the selected display panel (4).

4. Method for displaying and selecting displayed alphanumeric and/or symbol-type information in a motor vehicle, in which a display device (1) is used to present a plurality of display panels (3-6) for the purpose of displaying the alphanumeric and/or symbol-type information, wherein all the information - presented on a list basis - in the display panels (3-6) is presented on the display device (1) in the same typeface format in a first mode, wherein at least one display panel (4, 5) does not present the alphanumeric and/or symbol-type information completely in the first mode and wherein, following the selection of the display panel (3-6) using an operator control device (8), the presentation of the alphanumeric and/or symbol-type information in this display panel (4, 5) is matched, in a second mode, to the scope of the information that is to be displayed on the display device (1) by means of the display panel (4, 5) such that the full information is presented in the display panel (4, 5), **characterized in that** the typeface format is automatically reduced, with the display being matched only when the operator control device (8) operated for the purpose of marking the relevant display panel (4, 5) remains operated for a relatively long period of time.

5. Method according to Claim 4, **characterized in that** a presentation of the alphanumeric and/or symbol-type information is prescribed selectively or is automatically set on the basis of the legibility of the overall information.

6. Method according to one of Claims 4 and 5, **characterized in that** the selected display panel (4) is activated by at least one operator control device (8).

## Revendications

1. Système d'affichage et de sélection d'informations alphanumériques et/ou de type symboles affichées dans un véhicule automobile, comprenant un dispositif d'affichage (1) pour représenter plusieurs volets d'affichage (3-6) pour afficher les informations alphanumériques et/ou de type symboles, comprenant au moins un dispositif de commande (8) et un dispositif de traitement (7), toutes les informations représentées sous forme de listes étant représentées dans les volets d'affichage (3-6) sur le dispositif d'affichage (1) dans la même taille de police, les informations n'étant pas représentées dans leur intégralité dans au moins un volet d'affichage (4, 5) en raison de la taille limitée des volets d'affichage (3-6) et, après avoir sélectionné un volet d'affichage (4, 5) où les informations ne sont pas complètes avec le dispositif de commande (8), la représentation des informations alphanumériques et/ou de type symboles dans ce volet d'affichage (4, 5) étant adaptée à l'étendue des informations à afficher par le biais du volet d'affichage (4, 5) de telle sorte que les informations complètes sont affichées dans le volet d'affichage (4, 5) sur le dispositif d'affichage (1), **caractérisé en ce que** l'adaptation est effectuée de telle sorte que le dispositif de traitement (7) réduit la taille de police, l'adaptation de l'affichage n'étant effectuée que lorsque le dispositif de commande (8) actionné pour le marquage du volet d'affichage (4, 5) correspondant reste actionné pendant une période plus longue.

2. Système selon la revendication 1, **caractérisé en ce que** le dispositif de traitement (7) est configuré de telle sorte qu'une représentation des informations alphanumériques et/ou de type symboles peut, au choix, soit être prédéfinie, soit être réglée automatiquement en fonction de la lisibilité des informations globales.

3. Système selon l'une des revendications précédentes, **caractérisé en ce qu'**il est prévu un dispositif de commande (8) pour activer le volet d'affichage (4) sélectionné.

4. Procédé d'affichage et de sélection d'informations alphanumériques et/ou de type symboles affichées dans un véhicule automobile, selon lequel plusieurs volets d'affichage (3-6) sont représentés sur un dispositif d'affichage (1) pour afficher les informations alphanumériques et/ou de type symboles, toutes les informations représentées sous forme de listes étant représentées dans les volets d'affichage (3-6) dans un premier mode dans une même taille de police sur le dispositif d'affichage (1), les informations alphanumériques et/ou de type symboles n'étant pas représentées dans leur intégralité dans au moins un volet d'affichage (4, 5) dans le premier mode et, après avoir sélectionné le volet d'affichage (3-6) par le biais d'un dispositif de commande (8), dans un deuxième mode, la représentation des informations alphanumériques et/ou de type symboles dans ce volet d'affichage (4, 5) étant adaptée à l'étendue des informations à afficher sur le dispositif d'affichage (1) par le biais du volet d'affichage (4, 5) de telle sorte que les informations complètes sont affichées dans le volet d'affichage (4, 5), **caractérisé en ce que** la taille de police est automatiquement réduite, l'adaptation de l'affichage n'étant effectuée que lorsque le dispositif de commande (8) actionné pour le marquage du volet d'affichage (4, 5) correspondant reste actionné pendant une période plus longue.

5. Procédé selon la revendication 4, **caractérisé en ce qu'**une représentation des informations alphanumériques et/ou de type symboles est, au choix, soit prédéfinie, soit réglée automatiquement en fonction de la lisibilité des informations globales.

6. Procédé selon l'une des revendications 4 ou 5, **caractérisé en ce que** le volet d'affichage (4) sélectionné est activé par au moins un dispositif de commande (8).
